# EUROPÄISCHE PATENTSCHRIFT

(11) **EP 1 922 675 B1**
(45) Veröffentlichungstag und Bekanntmachung des Hinweises auf die Patenterteilung: **27.02.2013**
(21) Anmeldenummer: 06775945.6
(22) Anmeldetag: 04.09.2006
(51) Int. Cl.: G06K 19/077, H01Q 23/00, H01Q 1/38, H01Q 1/22

(54) **RFID-TRANSPONDER**
RFID-TRANSPONDER
TRANSPONDEUR RFID

(30) Priorität: 06.09.2005 DE 102005042444
(43) Veröffentlichungstag der Anmeldung: 21.05.2008
(73) Patentinhaber: KSW Microtec AG, 01099 Dresden (DE)
(72) Erfinder: GALLSCHÜTZ, Sebastian, 01127 Dresden (DE); RUPRECHT, Harald, 79312 Emmendingen (DE)
(74) Vertreter: Lippert, Stachow & Partner
(86) Internationale Anmeldenummer: PCT/DE2006/001592
(87) Internationale Veröffentlichungsnummer: WO 2007/028379

(56) Entgegenhaltungen:
- EP-A1- 1 031 939
- WO-A-03/096478
- DE-A1- 19 516 227
- US-A- 5 491 483

## Beschreibung

Die Erfindung betrifft eine Anordnung für einen Radio Frequency Identification (RFID) Transponder (RFID, engl. für Funk-Erkennung).

Mit der RFID - Methode ist es möglich, Daten berührungslos und ohne Sichtkontakt zu lesen und zu speichern. RFID wird als Oberbegriff für eine komplette technische Infrastruktur verwendet. Ein RFID-System umfasst:
- den Transponder, auch als Tag oder als Smart Label bezeichnet,
- die Sende-Empfarigs-Einheit und,
- die Integration mit Servern, Diensten und sonstigen Systemen.

Der RFID-Transponder ist Gegenstand der vorliegenden Erfindung.

Im Stand der Technik sind RFID-Transponder, bestehend aus einem Mikrochip, einer resonanten Struktur und einer impedanzanpassenden Struktur, bekannt. Dabei sind die resonante Struktur und die impedanzanpassende Struktur beide galvanisch mit dem Mikrochip verbunden.

Die Aufgabe der impedanzanpassenden Struktur besteht darin, eine Abstimmung der Größe der Fußpunktimpedanz der Transponderantenne auf die Eingangsimpedanz des Transponderchips vorzunehmen, und damit eine Optimierung der Energieübertragung zu sichern. Dazu werden nach dem Stand der Technik induktiv wirkende Antennenelemente eingesetzt, welche beispielsweise in "Antenna Theory", Balanis, Constantine, John Wiley & Sons 1997 oder in "Antennas for all Applications", Kraus, John und Marhefka, Ronald, McGraw Hill 2002 beschrieben werden..

Der Mikrochip und die resonante Struktur bilden gemeinsam den RFID-Transponder, wobei die Impedanzanpassung nach dem Stand der Technik innerhalb der resonanten Struktur erfolgt. So geht beispielsweise aus der US 6,285,342 B1 ein RFID-Transponder mit einer miniaturisierten resonanten Antenne hervor.

Nachteilig an den im Stand der Technik bekannten Lösungen ist, dass die gewünschte optimale Anpassung des Mikrochips mit den bekannten Strukturen verfahrens- und fertigungstechnisch aufwendig und somit kostenintensiv ist. Für die Fertigung der Transponder ist eine hohe Geometriegenauigkeit erforderlich, was bei den relativ großen Strukturen zu erheblichen Aufwendungen führt.

Weiterhin ist den Lösungen nach dem Stand der Technik der Nachteil zueigen, dass es bei elektrostatischen Entladungen (ESD, eng. electro static discharge) zur Schädigung bzw. zur Zerstörung des Mikrochips kommen kann, was die Betriebssicherheit und die Lebensdauer des Transponders negativ beeinflusst.

Aus DE 195 16 227 A1 ist eine Datenträgeranordnung, insbesondere Chipkarte bekannt, mit einem Halbleiterchip, der mit einer ersten zumindest eine Windung aufweisenden Leiterschleife, verbunden ist, mit zumindest einer zweiten zumindest eine Windung aufweisenden Leiterschleife, deren Querschnittsfläche etwa die Abmessungen der Datenträgeranordnung aufweist, wobei die Querschnittsfläche der ersten Leiterschleife etwa die Abmessungen des Halbleiterchips aufweist und wobei die beiden Leiterschleifen induktiv miteinander verkoppelt sind. Diese induktive Kopplung der beiden Leiterschleifen beschreibt ein Übertragungsverhalten, welches beispielsweise in Frequenzbereichen von 13,65 MHz nutzbar ist.

Eine Aufgabe der Erfindung besteht in der Vereinfachung der Anpassung der Fußpunktimpedanz einer gegebenen Antenne an die jeweilige Eingangsimpedanz der unterschiedlichen Transponderchiptypen unter Beibehaltung der Fernfeldcharakteristik.

Eine weitere Aufgabe der Erfindung besteht darin, bekannte RFID-Transponder, bei denen eine elektromagnetische Kopplung zwischen resonanter Struktur und Impedanz anpassender Struktur vorgesehen ist, dahingehend zu verbessern, dass eine Fertigung mit geringer Geometriegenauigkeit möglich ist.

Weiterhin ist es eine Aufgabe, eine Verbesserung der elektrostatischen Schutzmaßnahmen zu erreichen.

Erfindungsgemäß wird die Aufgabe durch einen RFID - Transponder nach Anspruch 1 gelöst.

Die Konzeption der Erfindung besteht somit darin, die resonante Struktur räumlich von der Impedanz anpassenden Struktur zu trennen. Die Impedanz anpassende Struktur wird durch eine vorzugsweise schleifenförmige Leiterstruktur ausgebildet, deren Enden mit den Antennenanschlüssen des Chips elektrisch verbunden werden.

Überraschender Weise wurde gefunden, dass eine ausreichend kräftige Feldkopplung zwischen der Impedanz anpassenden schleifenförmigen Leiterstruktur und der resonanten Struktur besteht und somit auf eine galvanische Kopplung zwischen diesen Strukturen verzichtet werden kann.

Eine Anpassung der Impedanz ist durch die Wahl des Höhen-Breiten-Verhältnisses, den Umfang und die Konturgestaltung der Impedanz anpassenden Struktur sowie deren Abstand zur resonanten Struktur möglich.

Die erfindungsgemäße Lösung zur Anpassung des Mikrochips führt dazu, dass der Realteil unabhängig vom Imaginärteil anpassbar ist. Hierdurch sind unterschiedliche Mikrochiptypen als auch unterschiedliche Montage- und Assemblierverfahren einfach und flexibel an bekannte und bewährte resonante Strukturen anpassbar, was einen wirtschaftlichen Vorteil wegen der einfachen Qualifizierung darstellt.

Weitere Vorteile entstehen dadurch, dass mittels getrennter Träger für resonante Struktur und Impedanz anpassende Struktur mit Mikrochip Chipassemblierverfahren und die Herstellung der resonanten Strukturen unabhängig voneinander ausführbar und optimierbar sind, so dass niedrigste Kosten für jede einzelne Komponente erzielt werden können.

Eine Besonderheit der Lösung besteht darin, dass die Verbindung der Strukturen miteinander zum RFID-Transponder durch rein mechanisches Fügen möglich ist, weil keine elektrischen Verbindungen erforderlich sind, welche zusätzliche Kosten und Einschränkungen mit sich bringen würden.

Durch die vorzugsweise schleifenförmige Gestaltung der Impedanz anpassenden Struktur wird eine gerichtete Nahfeldkopplung zu der Schreibleseantenne einer Programmier- oder Testeinrichtung ermöglicht, wobei es für diesen Zweck besonders vorteilhaft ist, dass die resonante Struktur vollflächig abgeschirmt werden darf, wodurch deren Fernfeldwirkung unterdrückt wird.

Die Nahfeldkopplung erfolgt über ein B-Feld. Die Dimensionierung erfolgt über die Fläche, den Umfang sowie die geometrische Anordnung als Gestaltungselemente des Realteils und Imaginärteils.

Ein besonderer Vorteil der Erfindung besteht darin, dass insbesondere bei Transponderchips mit niedriger Eingangsimpedanz, resultierend aus niedrigem Widerstand (Realteil < 50 Ohm und/oder hoher Eingangskapazität einschließlich der parasitären Impedanzen resultierend aus der Montageart), eine Vereinfachung der Anpassung der Fußpunktimpedanz der Antenne an die Eingangsimpedanz des assemblierten Transponderchips erreicht wird.

Ein weiterer Vorteil der Erfindung besteht in der Verbesserung der Nahfeldcharakteristik, welche eine ausgeprägte Richtcharakteristik aufweist. Gleichfalls ermöglicht der RFID-Transponder vielfältige Montageformen und eine verbesserte Prüf- und Programmierbarkeit, beispielsweise durch RFID-Transponder im Web Verband bei der Herstellung als auch für die Verarbeitung von Rollenware in Druckern und Spendeaggregaten.

Eine flexible Assemblierung wird durch die elektrische Trennung der räumlich relativ großen resonanten Struktur von der relativ kleinen Impedanz anpassenden Struktur ermöglicht. Dies ist einer der wesentlichen Vorteile der Erfindung, da die hohe Geometriegenauigkeit nunmehr nur noch für den kleineren flächenmäßigen Bereich, nämlich den Mikrochip und die Impedanz anpassende Struktur umgesetzt werden muss. Dies führt zu signifikanten Kosteneinsparungen, da die Aufwendungen für die Geometriegenauigkeit bei einem Assemblierverfahren überproportional mit der Fläche der Strukturen steigt.

Die Trennung von Impedanz anpassender Struktur und resonanter Struktur führt weiterhin zu dem Vorteil, dass bei einer Veränderung des Mikrochips nur die Impedanz anpassende Struktur angepasst werden muss, wohingegen die resonante Struktur und deren Femfeldcharakteristik unverändert erhalten bleibt.

Auch die Verwendung von mehreren resonanten Strukturen mit unterschiedlicher räumlicher Anordnung für einen Transponder wird durch die Trennung von Impedanz anpassender Struktur und resonanter Struktur möglich.

Die Ausgestaltung auf einem gemeinsamen Träger, mit freier Wahl, ob eine Seite oder beide Seiten des Trägers genutzt werden oder aber die Strukturen jeweils auf getrennten Trägem ausgebildet werden, zählt zu den weiteren vorteilhaften Ausgestaltungen der Erfindung.

Als Träger bzw. als Substrat für die Strukturen sind prinzipiell alle die Wirkungsweise des Transponders nicht negativ beeinflussenden flächigen Körper aus geeigneten Materialien einsetzbar.

Ganz besonders vorteilhaft ist es jedoch, das Substrat aus flexiblen Materialien auszubilden. Insbesondere werden Kunststofffolien, Papier oder Textilien aber auch Gummi, Leder oder flexible Kompositwerkstoffe eingesetzt. Dies ist für den Einsatz der Transponder als elektronisches Etikett von besonderem Wert.

Die Strukturen selbst werden durch die gängigen Additiv- oder Subtraktiwerfahren hergestellt. Dazu gehören insbesondere das Drucken und Ätzen von Strukturen. Darüber hinaus ist auch das Umformen in Form von Stanzen und das Formen von Strukturen durch Biegen und /oder Legen einer Drahtschleife beispielsweise vorteilhaft erfindungsgemäß einsetzbar.

Nach einer bevorzugten Ausgestaltung der Erfindung ist die Struktur zur Impedanzanpassung auf einem ersten Substrat und die resonante Struktur auf einem zweiten Substrat angeordnet.

Vorteilhaft wird nach einer weiteren Ausgestaltung der Erfindung die Struktur zur Impedanzanpassung und die resonante Struktur auf unterschiedlichen Seiten eines Substrates angeordnet.

Eine besonders wirtschaftliche Ausgestaltung der Erfindung besteht darin, dass die resonante Struktur als Substrat ausgebildet ist und dass die Impedanz anpassende Struktur auf diesem Substrat angeordnet ist, wobei die Impedanz anpassende Struktur als Stanzteil auf das Substrat aufbringbar ausgebildet ist. In einer Ausgestaltungsvariante dazu wird die Impedanz anpassende Struktur in einer Kavität des Substrats angeordnet.

Nach einer besonders vorteilhaften Ausgestaltung der Erfindung wird die resonante Struktur als Element einer Verpackung ausgebildet und die Impedanz anpassende Struktur wird an der Verpackung angeordnet.

Die resonante Struktur und die Impedanz anpassende Struktur müssen elektrisch leitend ausgebildet sein. Folglich werden diese aus metallischen Werkstoffen und/oder elektrisch leitenden Kunststoffen, Farben und/oder leitenden Partikeln ausgebildet. Anwendungsfälle sind beispielsweise elektrisch leitende Polymerpasten mit Metallen und /oder Nanopartikeln.

Eine vorteilhafte Auswirkung der Trennung der resonanten Struktur vom Mikrochip und der Impedanz anpassenden Struktur besteht in der modularen Kombinierbarkeit von unterschiedlichen Mikrochiptypen mit verschiedenen resonanten Strukturen für einen Transponder.

Zudem entsteht ein vorteilhafter Effekt für die Herstellung der erfindungsgemäßen RFID-Transponder, in dem die Impedanz anpassende Struktur und die Chipmontage mit der notwendig hohen Präzision erfolgen und die resonante Struktur mit geringeren Toleranzanforderungen und damit preiswertest hergestellt wird.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: RFID-Transponder mit M-förmiger resonanter Struktur,
- Fig. 2:: RFID-Transponder mit zwei parallelen resonanten Strukturen,
- Fig. 3:: RFID-Transponder mit symmetrischer mäanderförmiger Struktur,
- Fig. 4:: RFID-Transponder mit linienförmiger Struktur und
- Fig. 5:: RFID-Transponder als Konstruktionselement am Beispiel Verpackungspalettenfuß

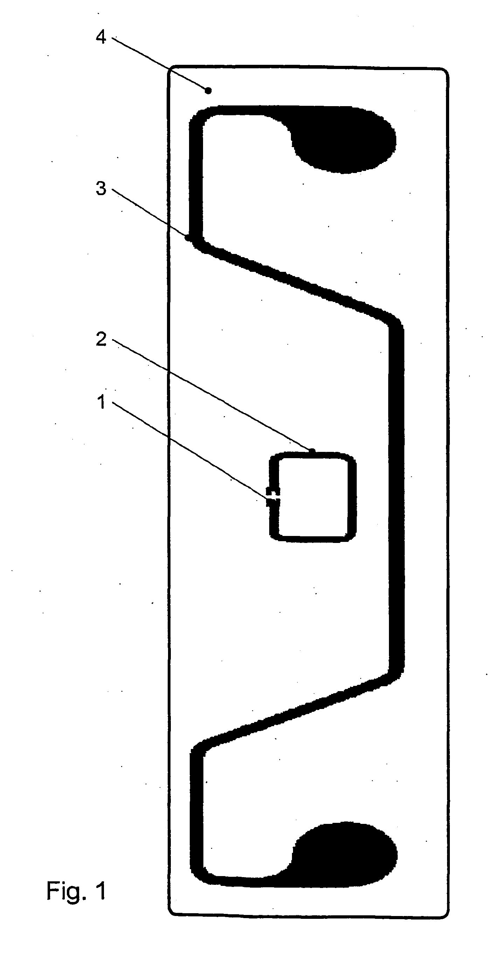

In Fig. 1 ist ein RFID-Transponder mit einem Mikrochip 1, einer Impedanz anpassenden Struktur 2 und einer resonanten Struktur 3 schematisch dargestellt. Die Komponenten sind auf einem Substrat 4 angeordnet, welches aus einem flexiblen Material, wie einer Kupfer kaschierten Kunststofffolie aus PET (Polyethylen-Therephtalat) ausgebildet ist. Die Impedanz anpassende Struktur ist als rechteckige Schleife durch Ätzen ausgebildet.

Die resonante Struktur 3 ist in M-Form ausgebildet und besitzt erfindungsgemäß keine galvanische Verbindung zu der Schleifenstruktur 2 mit dem Mikrochip 1.

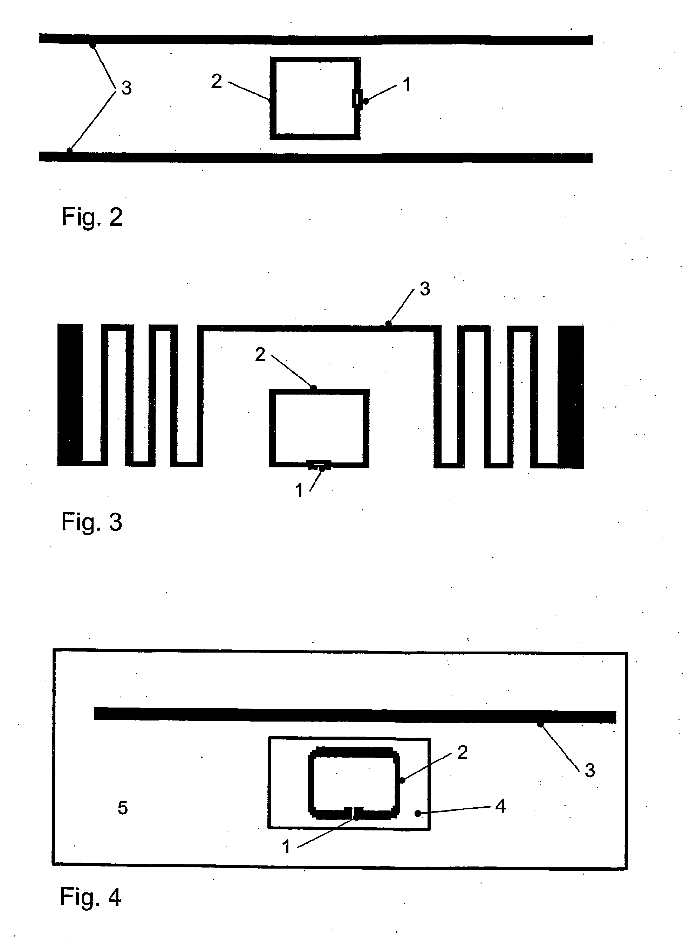

Fig. 2 zeigt einen erfindungsgemäßen RFID-Transponder, wobei die Impedanz anpassende Schleifenstruktur 2 als quadratische Schleife ausgebildet ist. Die resonante Struktur 3 wird durch zwei parallel beabstandete Streifenstrukturen gebildet zwischen denen die Schleifenstruktur 2 angeordnet ist.

Fig. 3 zeigt eine axialsymmetrische Anordnung, wobei die Symmetrieachse durch den Mikrochip und die quadratische Schleifenstruktur 2 verläuft. Die Schleifenstruktur 2 wird von der resonanten Struktur 3 umgeben, welche mäanderförmig gefaltet ist, so dass die Gesamtbaulänge verkürzt wird.

In Fig. 4 ist der Mikrochip 1 mit der Schleifenstruktur 2 auf einem ersten Substrat1 mit dem Bezugszeichen 4 angeordnet wohingegen die resonante Struktur 3 auf einem zweiten Substrat2 mit dem Bezugszeichen 5 angeordnet ist. Der RFID-Transponder wird gebildet, indem das Substrat 4 auf dem Substrat 5 angeordnet wird.

Die Anordnungen der Strukturen auf verschiedenen Substraten oder deren Herstellung zu verschiedenen Zeitpunkten in verschiedenen Prozessen ermöglicht besonders kostengünstige Herstellungsverfahren.

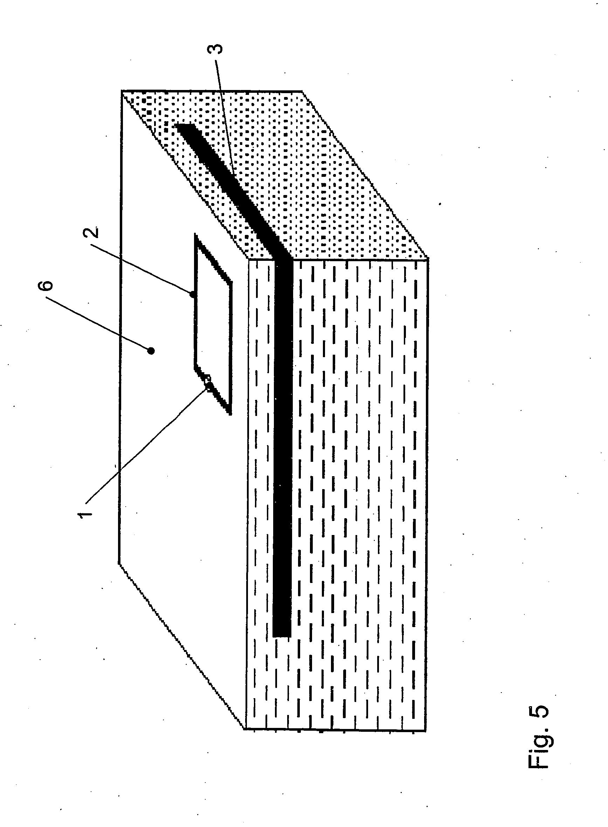

In Fig. 5 ist der Anwendungsfall einer in das Produkt oder dessen Verpackung integrierten RFID-Transponderlösung dargestellt.

Die resonante Struktur 3 ist als Blechbeschlag an einem Palettenfuß 6 zwei Seiten umgreifend nach außen gerichtet befestigt. Die Impedanz anpassende Struktur 2 mit Mikrochip 1 wird gegen Umwelteinflüsse geschützt zwischen Palettenfuß 6 und nicht dargestellter Lattung eingebracht.

Besonders vorteilhaft ist, dass durch die Trennung von resonanter Struktur 3 und Impedanz anpassender Struktur 2 diese auch räumlich getrennt angeordnet werden können. Eine infolge des Transports beschädigte resonante Struktur 3 am Palettenfuß 6 kann ohne größeren Aufwand ersetzt werden, wohingegen der Mikrochip 1 und die Impedanz anpassende Struktur 2 geschützt angeordnet sind und die Informationen somit nicht verloren gehen, was zu einer Erhöhung der Sicherheit der Informationsübermittlung führt.

Die elektrische Verbindung zwischen Mikrochip 1 und der Impedanz anpassenden Struktur 2 wird mittels Kontakthügeln über die Flip Chip Montage besonders bevorzugt ausgebildet. Weiterhin ist die Verbindung mit Drähten, gedruckten Kontakten oder mittels additiver Verfahren hergestellten Kontakte ausbildbar.

### LISTE DER BEZUGSZEICHEN

- 1: Mikrochip
- 2: Impedanz anpassende Struktur
- 3: Resonante Struktur
- 4: Substrat 1
- 5: Substrat 2
- 6: Palettenfuß einer Verpackungspalette

## Patentansprüche

1. RFID-Transponder mit mindestens
- einem Mikrochip (1), an dessen Antennenanschlüssen eine Antenne mit einer Antennenfußpunktimpedanz, bestehend aus
- einer Struktur zur Impedanzanpassung (2) und
- einer resonanten Struktur (3), angeschlossen ist, wobei
a) der Mikrochip (1) und die Struktur zur Impedanzanpassung (2) elektrisch leitend miteinander verbunden sind und
b) die resonante Struktur (3) keine galvanische Kopplung zum Mikrochip (1) und/oder der Struktur zur Impedanzanpassung (2) aufweist und dass
c) die Kopplung der resonanten Struktur (3) mit dem Mikrochip (1) und der Struktur zur Impedanzanpassung (2) über ein elektromagnetisches Feld ausgebildet ist,
**dadurch gekennzeichnet,**
**dass** die resonante Struktur (3) als Dipol und die Struktur zur Impedanzanpassung (2) als schleifenförmige Struktur ausgebildet sind, und die Antennenfußpunktimpedanz durch die Positionierung der Struktur zur Impedanzanpassung (2) relativ zur resonanten Struktur (3) an den Realteil des Mikrochips (1) unabhängig von dessen Imaginärteil anpassbar ist.

2. RFID-Transponder nach Anspruch 1, **dadurch gekennzeichnet, dass** die Struktur zur Impedanzanpassung (2) auf einem ersten Substrat (4) und die resonante Struktur (3) auf einem zweiten Substrat (5) angeordnet sind.

3. RFID-Transponder nach Anspruch 1, **dadurch gekennzeichnet, dass** die Struktur zur Impedanzanpassung (2) und die resonante Struktur (3) auf einer Seite oder auf unterschiedlichen Seiten eines Substrates (4) angeordnet sind.

4. RFID-Transponder nach einem der Ansprüche 1 bis 3 **dadurch gekennzeichnet, dass** die resonante Struktur (3) als Substrat (4) ausgebildet ist und dass die Impedanz anpassende Struktur (2) auf dem Substrat (4) angeordnet ist, wobei die Impedanz anpassende Struktur (2) als Stanzteil, als Stanzbiegeteil oder in Drahtlegetechnik auf das Substrat (4) aufbringbar ausgebildet ist.

5. RFID-Transponder nach einem der Ansprüche 1 bis 4, **dadurch gekennzeichnet, dass** die resonante Struktur (3) als Substrat (4) ausgebildet ist und dass die Impedanz anpassende Struktur (2) in einer Kavität des Substrats (4) angeordnet ist.

6. RFID-Transponder nach einem der Ansprüche 1 bis 5., **dadurch gekennzeichnet, dass** die resonante Struktur (3) als Element eines zu kennzeichnenden Objektes ausgebildet ist und dass die Impedanz anpassende Struktur (2) am Objekt angeordnet ist.

7. RFID-Transponder nach einem der Ansprüche 1 bis 6, **dadurch gekennzeichnet, dass** die resonante Struktur (3) und die Impedanz anpassende Struktur (2) aus metallischen Werkstoffen und/oder elektrisch leitenden Kunststoffen, Farben und/oder leitenden Partikeln, ausgebildet ist.

8. RFID-Transponder nach einem der Ansprüche 1 bis 6, **dadurch gekennzeichnet, dass** das Substrat (4, 5) aus flexiblem Material ausgeführt ist und die Anordnung insgesamt flexibel ausgebildet ist.

9. RFID-Transponder nach Anspruch 8, **dadurch gekennzeichnet, dass** das Substrat (4, 5) aus Kunststofffolie, Papier, Textilien, Gummi, Leder oder flexiblen Kompositwerkstoffen ausgebildet ist.

10. RFID-Transponder nach einem der Ansprüche 1 bis 9, **dadurch gekennzeichnet, dass** die Verbindung zwischen Mikrochip (1) und der Impedanz anpassenden Struktur (2) mittels Kontakthügeln bei Flip Chip Montage, mittels Drähten, mittels gedruckten Kontakten oder mittels additiver Verfahren hergestellten Kontakten ausgebildet ist.

## Claims

1. RFID transponder comprising at least
- a microchip (1), to the antenna connections of which there is connected an antenna having an antenna base impedance, consisting of
- a structure for impedance matching (2) and
- a resonant structure (3), wherein
a) the microchip (1) and the structure for impedance matching (2) are electrically conductively connected to one another, and
b) the resonant structure (3) has no direct electrical coupling to the microchip (1) and/or the structure for impedance matching (2), and wherein
c) the coupling of the resonant structure (3) to the microchip (1) and the structure for impedance matching (2) is formed by means of an electromagnetic field,
**characterized in that** the resonant structure (3) is formed as a dipole and the structure for impedance matching (2) is formed as a looped structure, and the antenna base impedance can be matched to the real part of the microchip (1), independently of the imaginary part thereof, by the positioning of the structure for impedance matching (2) relative to the resonant structure (3).

2. RFID transponder according to Claim 1, **characterized in that** the structure for impedance matching (2) is arranged on a first substrate (4) and the resonant structure (3) is arranged on a second substrate (5).

3. RFID transponder according to Claim 1, **characterized in that** the structure for impedance matching (2) and the resonant structure (3) are arranged on one side or on different sides of a substrate (4).

4. RFID transponder according to any of Claims 1 to 3, **characterized in that** the resonant structure (3) is formed as a substrate (4), and **in that** the impedance matching structure (2) is arranged on the substrate (4), wherein the impedance matching structure (2) is formed as a stamped part, as a stamped and bent part or such that it can be applied to the substrate (4) using wire installing technology.

5. RFID transponder according to any of Claims 1 to 4, **characterized in that** the resonant structure (3) is formed as a substrate (4), and **in that** the impedance matching structure (2) is arranged in a cavity of the substrate (4).

6. RFID transponder according to any of Claims 1 to 5, **characterized in that** the resonant structure (3) is formed as an element of an object to be identified, and **in that** the impedance matching structure (2) is arranged at the object.

7. RFID transponder according to any of Claims 1 to 6, **characterized in that** the resonant structure (3) and the impedance matching structure (2) are formed from metallic materials and/or electrically conductive plastics, colorants and/or conductive particles.

8. RFID transponder according to any of Claims 1 to 6, **characterized in that** the substrate (4, 5) is embodied from a flexible material and the arrangement is formed in flexible fashion overall.

9. RFID transponder according to Claim 8, **characterized in that** the substrate (4, 5) is formed from plastic film, paper, textiles, rubber, leather or flexible composite materials.

10. RFID transponder according to any of Claims 1 to 9, **characterized in that** the connection between the microchip (1) and the impedance matching structure (2) is formed by means of contact bumps in the case of flip-chip mounting, by means of wires, by means of printed contacts or contacts produced by means of additive methods.

## Revendications

1. Transpondeur RFID présentant au moins :
- une micropuce (1) aux bornes d'antenne de laquelle est raccordée une antenne qui présente une impédance de pied d'antenne et constituée de
- une structure d'adaptation d'impédance (2) et
- une structure résonante (3),
a) la micropuce (1) et la structure d'adaptation d'impédance (2) étant reliées l'une à l'autre de manière électriquement conductrice,
b) la structure résonante (3) ne présente pas de liaison galvanique par rapport à la micropuce (1) et/ou par rapport à la structure d'adaptation d'impédance (2) et
c) la liaison de la structure résonante (3) à la micropuce (1) et à la structure d'adaptation d'impédance (2) est formée par l'intermédiaire d'un champ électromagnétique,
**caractérisé en ce que**
la structure résonante (3) est configurée comme dipôle et la structure d'adaptation d'impédance (2) comme structure en forme de boucle et l'impédance de pied d'antenne peut être adaptée à la partie réelle de la micropuce (1) indépendamment de sa partie imaginaire par le positionnement de la structure d'adaptation d'impédance (2) par rapport à la structure résonante (3).

2. Transpondeur RFID selon la revendication 1, **caractérisé en ce que** la structure d'adaptation d'impédance (2) est disposée sur un premier substrat (4) et la structure résonante (3) sur un deuxième substrat (5).

3. Transpondeur RFID selon la revendication 1, **caractérisé en ce que** la structure d'adaptation d'impédance (2) et la structure résonante (3) sont disposées sur un même côté ou sur des côtés différents d'un substrat (4).

4. Transpondeur RFID selon l'une des revendications 1 à 3, **caractérisé en ce que** la structure résonante (3) est configurée comme substrat (4) et **en ce que** la structure (2) adaptant l'impédance est disposée sur le substrat (4), la structure (2) adaptant l'impédance étant configurée comme pièce estampée ou comme pièce estampée et cintrée, ou pouvant être appliquée sur le substrat (4) par une technique de pose de fil.

5. Transpondeur RFID selon l'une des revendications 1 à 4, **caractérisé en ce que** la structure résonante (3) est configurée comme substrat (4) et **en ce que** la structure (2) adaptant l'impédance est disposée dans une cavité du substrat (4).

6. Transpondeur RFID selon l'une des revendications 1 à 5, **caractérisé en ce que** la structure résonante (3) est configurée comme élément d'un objet à caractériser et **en ce que** la structure (2) adaptant l'impédance est disposée sur l'objet.

7. Transpondeur RFID selon l'une des revendications 1 à 6, **caractérisé en ce que** la structure résonante (3) et la structure (2) adaptant l'impédance sont formées d'un matériau métallique et/ou de matière synthétique électriquement conductrice, d'encre électriquement conductrice et/ou de particules conductrices.

8. Transpondeur RFID selon l'une des revendications 1 à 6, **caractérisé en ce que** le substrat (4, 5) est réalisé en un matériau flexible et l'ensemble est globalement flexible.

9. Transpondeur RFID selon la revendication 8, **caractérisé en ce que** le substrat (4, 5) est constitué d'une feuille de matière synthétique, de papier, de textile, de caoutchouc, de cuir ou de matériaux composites flexibles.

10. Transpondeur RFID selon l'une des revendications 1 à 9, **caractérisé en ce que** le raccordement entre la micropuce (1) et la structure (2) adaptant l'impédance est réalisé au moyen de bosses de contact de montage dits "flip chip", au moyen de fils, au moyen de contacts imprimés ou au moyen de contacts réalisés par des procédés d'addition.
